# EUROPÄISCHE PATENTSCHRIFT

(11) **EP 1 074 416 B1**
(45) Veröffentlichungstag und Bekanntmachung des Hinweises auf die Patenterteilung: **17.01.2007**
(21) Anmeldenummer: 00115535.7
(22) Anmeldetag: 19.07.2000
(51) Int. Cl.: B60J 10/08, B60J 5/04, B60R 13/04

(54) **Kraftfahrzeugtür**
Motor vehicle door
Porte de véhicule automobile

(30) Priorität: 03.08.1999 DE 19936390
(43) Veröffentlichungstag der Anmeldung: 07.02.2001
(73) Patentinhaber: Volkswagen Aktiengesellschaft, 38436 Wolfsburg (DE)
(72) Erfinder: Langer, Jan Werner, Dipl.-Ing., 38448 Wolfsburg (DE); Lau, Norbert, 38442 Wolfsburg (DE); Reitmeier, Heinz-Jürgen, 38442 Wolfsburg (DE)

(56) Entgegenhaltungen:
- US-A- 4 719 689
- US-A- 5 067 281
- US-A- 5 273 606
- US-A- 5 446 999
- PATENT ABSTRACTS OF JAPAN vol. 012, no. 296 (M-731), 12. August 1988 (1988-08-12) -& JP 63 074722 A (AISIN CHEM CO LTD;OTHERS: 01), 5. April 1988 (1988-04-05)
- PATENT ABSTRACTS OF JAPAN vol. 015, no. 178 (M-1110), 8. Mai 1991 (1991-05-08) -& JP 03 042328 A (NISSAN MOTOR CO LTD), 22. Februar 1991 (1991-02-22)
- PATENT ABSTRACTS OF JAPAN vol. 013, no. 593 (M-914), 27. Dezember 1989 (1989-12-27) -& JP 01 249512 A (NANJIYOU SOBI KOGYO KK), 4. Oktober 1989 (1989-10-04)
- PATENT ABSTRACTS OF JAPAN vol. 012, no. 031 (M-663), 29. Januar 1988 (1988-01-29) -& JP 62 184976 A (NISSAN MOTOR CO LTD), 13. August 1987 (1987-08-13)

## Beschreibung

Die Erfindung betrifft eine Kraftfahrzeugtür mit einem Außenrand nach dem Oberbegriff des Anspruchs 1, wie sie aus der JP 63 074 722 A bekannt ist.

Die Abdichtung von Kraftfahrzeugtüren stellt in zweierlei Hinsicht besondere Anforderungen. Zum einen wird der Rand einer Fahrzeugtür in der Regel von einem Blechfalz gebildet, welcher in ausreichender Weise gegen Korrosion zu schützen ist. Zum anderen bildet die Tür einen häufig geöffneten und geschlossenen Zugang zum Fahrzeuginnenraum, wobei im geschlossenen Zustand der Tür eine gleichbleibend ausreichende Geräusch- und Wasserdichtung gewährleistet sein muß.

Der vorliegenden Erfindung lag die Aufgabe zugrunde, eine Kraftfahrzeugtür mit verbesserten Eigenschaften hinsichtlich des Korrosionsschutzes und hinsichtlich der Dichtung gegenüber dem Eintreten von Fahrtwind, Nässe und Schall zur Verfügung zu stellen und gleichzeitig zu erreichen, dass die Feinnaht optisch nicht in Erscheinung tritt.

Diese Aufgabe wird durch eine Kraftfahrzeugtür mit den Merkmalen des Anspruchs 1 gelöst.

Durch den erfindungsgemäßen Aufbau des Außenrandes einer Kraftfahrzeugtür, insbesondere durch die kombinierte Ausgestaltung der Verklebung, der Feinnahtdichtung und der Geräusch- und Wasserdichtung, wird ein hoher Korrosionsschutz der Kraftfahrzeugtür und eine gute Abdichtung des Fahrzeuginnenraumes gegen den Eintritt von Luft, Nässe und Schall erreicht.

Die Verklebung des Blechfalzes der Kraftfahrzeugtür kann vorzugsweise aus Polyvinylchlorid (PVC), Epoxidkleber oder einem Gemisch hiervon bestehen. Eine derartige Verklebung vereinigt die Vorteile einer guten Verarbeitbarkeit mit einer hervorragenden Qualität des Ergebnisses. Weiterhin sind die genannten Materialien gut entfernbar, falls sie aus dem Bereich der Verklebung herausquellen sollten. Während PVC leicht abkratzbar ist, erstarrt das Epoxid zu einer großen Härte und kann somit abgestoßen oder abgeschliffen werden. Ein Herausquellen der Verklebung aus dem Blechfalz ist im allgemeinen zu vermeiden, damit für nachfolgend zu montierende Elemente (wie z.B. Folien, Raupen, Pulverlackschichten, Elektrotauchlackschichten etc., siehe unten) eine saubere Auflage zur Verfügung steht.

Die Feinnahtdichtung des Blechfalzes besteht erfindungsgemäß aus einer Folie. Das Aufbringen einer Folie über einen Blechfalz begegnet in der Durchführung keinen besonderen Schwierigkeiten. Insbesondere läßt es sich robotergesteuert durchführen und eignet sich somit für eine automatisierte Produktion. Hierdurch können die Herstellungskosten gesenkt werden, wobei zugleich ein sehr präzises und reproduzierbares Ergebnis gewährleistet ist. Reproduzierbarkeit wird nicht zuletzt auch dadurch garantiert, daß die Folie definierte Eigenschaften wie z.B. eine gleichbleibende Dicke aufweist. Anders als bei einem Pulverlack ist die Gefahr produktionsbedingter Schwachstellen äußerst gering. Andererseits beansprucht die Folie im Gegensatz zu einer Raupe aus Dichtungsmasse nur eine verschwindend geringe Schichtdicke, so daß sie anderen Elementen nicht im Wege steht und auch optisch nicht störend auffällt. Der Schutzüberzug aus einer Folie wird an dem Blechfalz am Rand einer Kraftfahrzeugtüre vorgesehen. An dieser Stelle machen sich die positiven Eigenschaften der Folie besonders bemerkbar, da dort einerseits ein Platzbedarf für herkömmliche Wasser- und Geräuschdichtungen der Tür besteht und andererseits der entsprechende Blechfalz sichtbar ist, so daß es auf ein optisch akzeptables Erscheinungsbild ankommt. Die Folie kann aus Kunststoff hergestellt sein, wobei hierfür vorzugsweise Polyvinylchlorid (PVC) oder Polyethylen (PE) in Frage kommen. Die genannten Materialien sind einerseits kostengünstig und erfüllen andererseits in zufriedenstellendem Maße ihre Schutzfunktion. Weiterhin ist die Folie vorzugsweise selbstklebend ausgestaltet, so daß sie besonders einfach auf den Blechfalz aufgetragen werden kann. Bei einer selbstklebenden Folie ist kein separates Aufbringen eines Klebers notwendig, so daß ein zusätzlicher Arbeitsschritt entfällt. Andererseits behält die selbstklebende Folie die ihr einmal gegebene Positionierung bei, bis sie gegebenenfalls in einem späteren Arbeitsschritt endgültig fixiert wird. Ferner ist die genannte Folie lackierbar. Die Folie kann dann bei der späteren Verarbeitung genauso behandelt werden wie das sie umgebende Material. Insbesondere kann sie dieselbe Lackierung wie das restliche Bauteil erhalten, so daß sie optisch nicht in Erscheinung tritt. Die Dicke der Folie kann in einem Bereich von 40 bis 500 µm, vorzugsweise von 80 bis 350 µm, besonders bevorzugt von 100 bis 300 µm liegen. Die genannten Werte gewährleisten einerseits einen ausreichenden Schutz des zu überdeckenden Blechfalzes, andererseits hebt sich die Folie damit nicht oder kaum aus der übrigen Lackschicht hervor. Weiterhin ist eine Folie mit den genannten Dicken gut handhabbar, da sie eine ausreichende Eigenstabilität besitzt. Vorzugsweise wird die Folie auf das Blech aufgeschmolzen. Die Verbindung zwischen Folie und Blech wird dann besonders innig, so daß die Folie hervorragend ihre Schutzwirkung ausüben kann. Erfindungsgemäß wird die Kraftfahrzeugtür einer Elektrotauchlackierung, vorzugsweise einer kathodischen Elektrotauchlackierung (KTL), unterzogen. Daran anschließend wird ein Decklack aufgetragen. Vor der Elektrotauchlackierung wird eine Folie als Schutzüberzug über den Blechfalz gelegt. Mit dem genannten Verfahren läßt sich ein Schutzüberzug für einen Blechfalz erzeugen, welcher die oben beschriebenen Vorteile aufweist. Die Folie wird dabei vor der Elektrotauchlackierung und vor dem Aufbringen des Decklackes aufgetragen. Vorzugsweise wird bei dem Verfahren die Folie aufgeklebt. Ein Aufkleben läßt sich einerseits besonders einfach und insbesondere automatisiert durchführen, andererseits führt es unmittelbar zu einer sicheren Positionierung der Folie. In einer Weiterbildung des Verfahrens wird die Folie mit dem Blechfalz verschmolzen. Hierdurch entsteht eine besonders innige Verbindung zwischen Folie und Blech bzw. Folie und Elektrotauchlack, welche einen sicheren Sitz des Schutzüberzuges gewährleistet. Das Material für die Folie ist dabei vorzugsweise thermoplastisch und erweicht bei Temperaturen zwischen etwa 150 und 300°C. Das Verschmelzen der Folie mit dem Blechfalz kann vorzugsweise während der Ofentrocknung des Decklackes stattfinden. In diesem Falle ist für den Verschmelzungsvorgang kein eigener Bearbeitungsprozeß erforderlich, da die ohnehin durchzuführende Ofentrocknung hierfür ausgenutzt wird.

Die Geräusch- und Wasserdichtung ist vorteilhafterweise mit dem Innenblech und/oder der Feinnahtabdichtung verklebt. Als Klebemittel kommt insbesondere ein Doppelklebeband in Betracht, welches sich gut aufbringen und weiterverarbeiten läßt. Durch die genannte Verklebung der Geräusch- und Wasserdichtung wird eine vollständig dichte Verbindung zur Tür gewährleistet.

Die Geräusch- und Wasserdichtung kann zusätzlich (oder alternativ) über eine Steckverbindung mit dem Innenblech verbunden sein. Eine derartige Steckverbindung erlaubt eine schnelle und einfache Montage der Dichtung an der Tür. Insbesondere kann die Montage automatisiert von Robotern durchgeführt werden.

Ebenso ist es möglich, daß die Geräusch- und Wasserdichtung aus einer aufgespritzten Dichtungsmasse besteht. Als Material für die Dichtungsmasse kommt insbesondere PVC in Betracht. Derartige Dichtungen sind im Prinzip bekannt und werden aufgrund ihres Aussehens häufig als sogenannte "Raupe" bezeichnet.

In bezug auf ihre Anbringung an der Tür bildet die Geräusch- und Wasserdichtung vorzugsweise ein Nebendichtungsband, welches zumindest abschnittsweise parallel zu einem Hauptdichtungsband verläuft, wobei das Hauptdichtungsband ganz oder teilweise um die Türöffnung in der Karosserie und/oder die Tür umläuft. Eine derartige Anordnung hat den Vorteil, daß das Nebendichtungsband eine Verstärkung des Hauptdichtungsbandes an den Stellen bildet, an welchen besonders hohe Belastungen durch den Fahrtwind, durch Nässe oder durch Geräuschentwicklungen bestehen und an denen das Hauptdichtungsband gerade bei hohen Fahrzeuggeschwindigkeiten oder bei Verwindung der Karosserie (z.B. bei Fahrten auf unebenen Straßen) undicht wird.

Im folgenden wird die Erfindung beispielhaft anhand der Figuren erläutert.
- Figur 1: zeigt eine Kraftfahrzeugtür in der Seitenansicht.
- Figur 2: zeigt einen Schnitt entlang der Linie II-II nach Figur 1.
- Figur 3: zeigt vergrößert den Ausschnitt III von Figur 1.

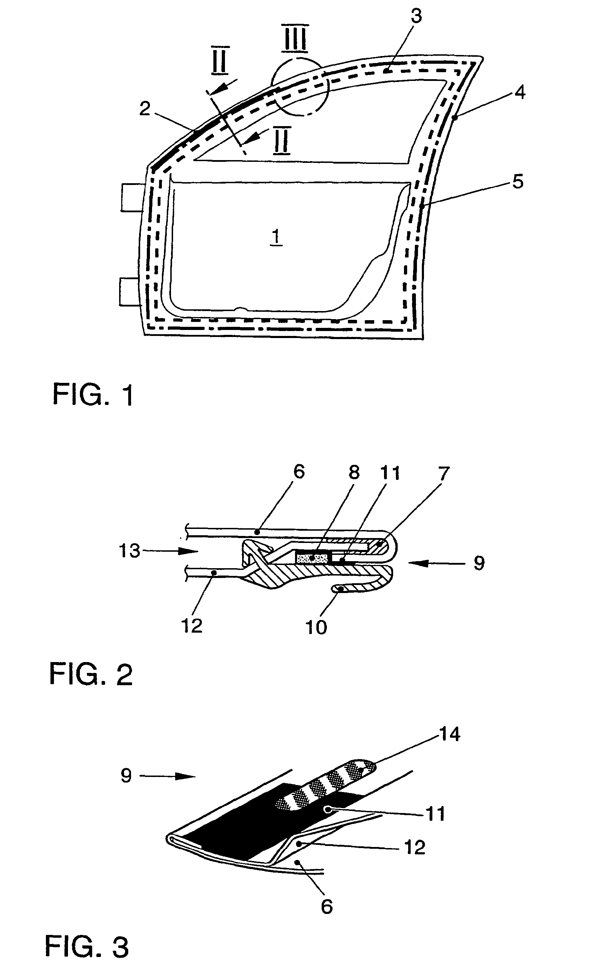

In Figur 1 ist die Seitenansicht einer Kraftfahrzeugtür 1 dargestellt. Durch eine um den Rand der Tür umlaufende gestrichelte Linie 3 wird der Verlauf eines Hauptdichtungsbandes zur Geräusch- und Wasserdichtung symbolisiert. Die parallel hierzu umlaufende Linie 5 deutet den Verlauf eines Blechfalzes an, welcher den Rand der Tür 1 bildet.

Weiterhin ist ein auf der Linie 5 gelegener Abschnitt im vorderen oberen Bereich der Tür hervorgehoben. Dort kann zusätzlich zum Hauptdichtungsband 3 an der Türöffnung und/oder der Tür ein Nebendichtungsband 2 angeordnet sein, welches zumindest abschnittsweise parallel zum Hauptdichtungsband verläuft und vom Türmittelpunkt aus gesehen weiter außen als das Hauptdichtungsband angeordnet ist. Mit dem Nebendichtungsband gelingt es, insbesondere kritische Bereiche an der Tür hinreichend abzudichten, so daß sie auch bei hohen Fahrzeuggeschwindigkeiten und eventuell auftretenden Verwindungen der Karosserie eine ausreichende Abdichtung der Tür gewährleisten. Das Nebendichtungsband ist dabei radial, d.h. vom Türmittelpunkt ausgehend, weiter außen als das Hauptdichtungsband angeordnet. Das Hauptdichtungsband kann somit ohne Änderungen einem üblichen Verlauf folgen, da das Nebendichtungsband in einem bisher ungenutzten und daher freistehenden Bereich angeordnet wird. In diesem äußeren Bereich bewirkt das Nebendichtungsband einen ersten Schutz gegen Nässe, Fahrtwind und Schall, wodurch das Hauptdichtungsband in diesen Bereichen entlastet wird und somit auch bei höheren Beanspruchungen eine vollständige Abdichtung gewährleisten kann. Vorzugsweise wird das Nebendichtungsband im in Fahrtrichtung gesehen vorderen Bereich der Tür bzw. Türöffnung angeordnet. Dieser vordere Bereich der Tür ist einerseits primär dem Fahrtwind ausgesetzt, andererseits befinden sich dort die Türscharniere, so daß eventuelle Verwindungen der Karosserie sich in diesem Bereich am stärksten auswirken. Weiterhin wird das Nebendichtungsband vorzugsweise im oberen Bereich der Tür bzw. Türöffnung angeordnet. Auch für den oberen Bereich der Tür gilt, daß dieser im Vergleich zur unteren Türhälfte höheren Belastungen hinsichtlich des auftreffenden Fahrtwindes ausgesetzt ist. Außerdem kommt diesem Bereich vorrangige Bedeutung bei der Abdichtung gegen Regen zu. Der obere Bereich der Tür erfordert daher besonders eine zusätzliche Abdichtung durch das Nebendichtungsband. Das Nebendichtungsband beginnt dabei vorteilhafterweise etwa oberhalb der halben Fensterhöhe des in Fahrtrichtung gesehenen hinteren Fensterholmes. Von hier ausgehend verläuft es vorzugsweise um das Fenster herum bis in den Bereich der Motorhaube. Bei einer derartigen Anordnung des Nebendichtungsbandes wird in effizienter Weise der Hauptbelastungsbereich abgedichtet, ohne daß überschüssigerweise Dichtungsmaterial verbraucht würde. Eine derartige Abdichtung liegt somit im Optimum des Kosten/Nutzenverhältnisses. Es hat sich weiterhin als vorteilhaft herausgestellt, wenn das Hauptdichtungsband und das Nebendichtungsband an verschiedenen Teilen angeordnet sind. Das heißt, daß das Hauptdichtungsband an der Tür und das Nebendichtungsband an der Türöffnung angeordnet sein kann, oder daß sich umgekehrt das Nebendichtungsband an der Tür und das Hauptdichtungsband an der Türöffnung befinden kann. Eine derartige reziproke Anordnung der Dichtungsbänder ist unter anderem deshalb vorteilhaft, weil damit gewährleistet ist, daß an jedem der Elemente Tür bzw. Türöffnung mindestens ein Dichtungsband fest angeformt ist. Aufgrund dieser festen Verbindung kann somit prinzipiell kein Spalt zwischen Dichtungsband und entsprechendem Element entstehen.

Figur 2 zeigt einen Schnitt entlang der Linie II-II nach Figur 1, woraus der Aufbau des Blechfalzes 9 erkennbar wird. Der Blechfalz wird gebildet aus einem Innenblech 12 und einem Außenblech 6, wobei das Außenblech 6 um den Rand des Innenbleches 12 umgebogen ist. Außenblech 6 und Innenblech 12 sind im Bereich des Blechfalzes 9 durch einen Kleber 7 miteinander verklebt. Bei dem Kleber kann es sich insbesondere um PVC, einen Epoxidkleber oder ein Gemisch hiervon handeln. Die Verklebung 7 trägt erheblich zum Korrosionsschutz des Blechfalzes 9 bei. Wichtig ist, daß kein Kleber 7 aus dem Blechfalz herausquillt, damit ein Verschmutzen der Werkzeuge vermieden wird und auf den Blechaußenflächen eine saubere Auflage und eine gute Haftung für dort noch aufzubringende Beschichtungen besteht. Derartige Beschichtungen können z.B. in einer (kathodischen) Elektrotauchlackschicht, in einer Pulverlackschicht, in einer Folie oder in einer sogenannten "Raupe" aus Dichtungsmasse bestehen. Häufig wird die verklebte Blechfalz vorgeliert, wodurch eventuell ausgetretenes PVC abkratzbar wird bzw. Epoxid erhärtet.

Die Stirnseite des Außenbleches 6 wird im Bereich des Blechfalzes 9 durch eine Folie 11 abgedeckt. Diese Folie hat typischerweise eine Dicke von 100 bis 300 µm und ist selbstklebend und überlackierbar. Vorzugsweise besteht sie aus PVC oder Polyethylen (PE). Eine derartige Folie kann von einem Roboter aufgetragen werden, da sie gut handhabbar ist. Die Folie 11 stellt einen wirksamen Schutzüberzug über der Blechkante dar. Durch Verschmelzen mit den Blechen 6, 12 kann eine besonders innige und gut haftende Verbindung zur Folie hergestellt werden. Die in Figur 2 dargestellte Türaußenkante besitzt weiterhin eine Dichtung 10, welche für eine Geräusch- und Wasserdichtung der Tür 1 in der Türöffnung der Karosserie sorgt. Die Dichtung 10 kann insbesondere mit der Blechfalz 9 bzw. dem Türinnenblech 12 verklebt sein. Dies kann z.B. über ein Doppelklebeband 8 zwischen Dichtung 10 und Folie 11 geschehen. Weiterhin ist in Figur 2 zu erkennen, daß die Dichtung 10 mit einem Pilzkopf 13 durch ein Loch im Innenblech 12 gesteckt und damit in einer Steckverbindung nach Art eines Clips verankert ist. Alternativ oder zusätzlich hierzu kann auch ein Kleber durch eine Öffnung in der Dichtung in den Zwischenraum zwischen Dichtung und Tür gespritzt werden.

In Figur 3 ist der in Figur 1 mit der Ziffer III versehene Ausschnitt vergrößert und perspektivisch dargestellt. Zu erkennen sind das Außenblech 6, welches das Innenblech 12 an dessen Rand unter Ausbildung eines Blechfalzes 9 umgibt. Ferner ist erkennbar, daß die hierdurch gebildete offene Stirnseite des Bleches von einer Folie 11 abgedeckt wird. Als sich daran anschließendes Dichtungselement ist in Figur III eine sogenannte Raupe 14 aus einer Dichtungsmasse erkennbar. Diese Raupe wird in der Regel durch ein Spritzverfahren aufgebracht. In der in Figur 1 dargestellten Anordnung kann durch die Raupe insbesondere das Hauptdichtungsband 5 der Tür verwirklicht werden. Im Bereich des Abschnittes mit der Ziffer 2 wird dieses Hauptdichtungsband durch ein zusätzliches Nebendichtungsband verstärkt.

Die Beschichtung einer Fahrzeugtür 1 bzw. einer Fahrzeugkarosserie verläuft in der Regel so, daß zunächst eine kathodische Tauchlackierung (KTL) durchgeführt wird, wobei zum Schutz gegen Korrosion eine sehr dicke Tauchlackschicht aufgebracht werden kann. Diese Tauchlackschicht wird bei einer Temperatur von ca. 180°C +/- 20°C getrocknet. Anschließend wird optional ein Füller aufgebracht und bei ca. 160°C +/- 20°C getrocknet. Zuletzt erfolgt der Auftrag des Decklackes, welcher sich aus Basecoat und Clearcoat zusammensetzt und welcher bei ca. 140°C +/- 20°C getrocknet wird. Das Aufkleben der Folie 11 erfolgt vor der KTL. Die Folie wird dabei vorzugsweise bei den nachfolgenden Trocknungsvorgängen unter erhöhten Temperaturen auf ihren Untergrund aufgeschmolzen.

Beim Verlegen der Folie sind zu große Knicke (Richtungswechsel) zu vermeiden. Das heißt, daß bei einem Knick im Verlauf des Blechfalzes von weniger als 120°, insbesondere von weniger als 90° das Verlegen eines Folienstreifen beendet werden sollte und ein neuer Folienstreifen begonnen werden sollte. Der Verbindungsbereich zwischen den beiden Folienstreifen kann dabei durch Überstreichen mit z.B. PVC (oder einem anderen Raupenmaterial) abgedichtet werden. Ebenso kann die Verbindungsstelle mit einem Auftrag von Pulverlack geschützt werden. Knickstellen der genannten Art sind insbesondere bei den Fahrzeugtüren im Bereich der vier Ecken vorhanden.

### BEZUGSZEICHENLISTE

- 1: Kraftfahrzeugtür
- 2: Nebendichtungsband
- 3: Hauptdichtungsband
- 4: Fensterholm
- 5: Blechfalz
- 6: Außenblech
- 7: Verklebung
- 8: Doppelklebeband
- 9: Blechfalz
- 10: Dichtung
- 11: Folie
- 12: Innenblech
- 13: Steckverbindung
- 14: Raupe

## Patentansprüche

1. Kraftfahrzeugtür (1) mit einem Außenrand, welcher die folgenden Elemente enthält:
a) ein Innenblech (12),
b) ein Außenblech (6), dessen Rand unter Bildung eines Blechfalzes (9) zumindest teilweise um den Rand des Innenbleches (12) umgebogen ist,
c) eine Verklebung (7) des Blechfalzes (9), **dadurch gekennzeichnet, dass** die Kraftfahrzeugtür (1) mit einer Elektrotauchlackierung versehen ist,
d) eine Feinnahtdichtung (11) vorgesehen ist, welche die Stirnseite des umgebogenen Randes des Außenbleches (6) überdeckt,
e) sowie eine parallel zur Feinnahtdichtung (11) angeordnete Geräusch- und Wasserdichtung (10), wobei die Feinnahtdichtung (11) als Folie ausgebildet ist und die Folie vor der Elektrotauchlackierung aufgetragen wird.

2. Kraftfahrzeugtür nach Anspruch 1, **dadurch gekennzeichnet, dass** die Verklebung (7) des Blechfalzes (9) aus Polyvinylchlorid, Epoxidkleber oder einer Mischung hieraus besteht.

3. Kraftfahrzeugtür nach einem der Ansprüche 1 oder 2, **dadurch gekennzeichnet, dass** die Geräusch- und Wasserdichtung (10) mit dem Innenblech (12) und/oder der Feinnahtabdichtung (11) verklebt ist.

4. Kraftfahrzeugtür nach einem der Ansprüche 1 bis 3, **dadurch gekennzeichnet, dass** die Geräusch- und Wasserdichtung (10) über eine Steckverbindung (13) mit dem Innenblech (12) verbunden ist.

5. Kraftfahrzeugtür nach einem der Ansprüche 1 bis 4, **dadurch gekennzeichnet, dass** die Geräusch- und Wasserdichtung aus einer aufgespritzten Dichtungsmasse (14) besteht.

6. Kraftfahrzeugtür nach einem der Ansprüche 1 bis 5, **dadurch gekennzeichnet, dass** die Geräusch- und Wasserdichtung (10) ein Nebendichtungsband (2) bildet, welches zumindest abschnittsweise parallel zu einem Hauptdichtungsband (3) verläuft, wobei das Hauptdichtungsband ganz oder teilweise um die Türöffnung in der Karosserie und/oder die Tür (1) herumläuft.

## Claims

1. Motor vehicle door (1) with an outer edge which contains the following elements:
a) an inside panel (12),
b) an outside panel (6), the edge of which is at least partially bent over around the edge of the inside panel (12) forming a sheet-metal fold (9),
c) an adhesive bonding (7) of the sheet-metal fold (9), **characterized in that** the motor vehicle door (1) is provided with an electrocoating,
d) a fine seam seal (11) is provided covering the end side of the bent-over edge of the outside panel (6),
e) and a noise and water seal (10) arranged parallel to the fine seam seal (11), the fine seam seal (11) being designed as a film and the film being applied before the electrocoating.

2. Motor vehicle door according to Claim 1, **characterized in that** the adhesive bonding (7) of the sheet-metal fold (9) is composed of polyvinyl chloride, epoxy adhesive or a mixture thereof.

3. Motor vehicle door according to either of Claims 1 and 2, **characterized in that** the noise and water seal (10) is adhesively bonded to the inside panel (12) and/or to the fine seam seal (11).

4. Motor vehicle door according to one of Claims 1 to 3, **characterized in that** the noise and water seal (10) is connected to the inside panel (12) via a plug-in connection (13).

5. Motor vehicle door according to one of Claims 1 to 4, **characterized in that** the noise and water seal is composed of a sealing compound (14) which is sprayed on.

6. Motor vehicle door according to one of Claims 1 to 5, **characterized in that** the noise and water seal (10) forms a secondary sealing strip (2) which, at least in some sections, runs parallel to a main sealing strip (3), the main sealing strip running entirely or partially around the door opening in the vehicle body and/or around the door (1).

## Revendications

1. Portière de véhicule automobile (1) comportant un bord extérieur équipé des éléments suivants :
a) une tôle intérieure (12),
b) une tôle extérieure (6) dont le bord est recourbé au moins partiellement autour du bord de la tôle intérieure (12) en formant un rabat de tôle (9),
c) un collage (7) du rabat de tôle (9), **caractérisée en ce que** la portière de véhicule automobile (1) est pourvue d'un vernissage à immersion électrique,
d) il est prévu un joint à cordon fin (11) qui recouvre la face frontale du bord recourbé de la tôle extérieure (6),
e) ainsi qu'un joint anti-bruit et anti-eau (10) disposé parallèlement au joint à cordon fin (11), le joint à cordon fin (11) se présentant sous la forme d'un film et le film étant appliqué avant le vernissage par immersion électrique.

2. Portière de véhicule selon la revendication 1, **caractérisée en ce que** le collage (7) du rabat de tôle (9) est composé de chlorure de polyvinyle, de colle époxyde ou d'un mélange de ces matières.

3. Portière de véhicule selon l'une quelconque des revendications 1 ou 2, **caractérisée en ce que** le joint anti-bruit et anti-eau (10) est collé à la tôle intérieure (12) et/ou au joint à cordon fin (11).

4. Portière de véhicule selon l'une quelconque des revendications 1 à 3, **caractérisée en ce que** le joint anti-bruit et anti-eau (10) est relié par une connexion à fichage (13) à la tôle intérieure (12).

5. Portière de véhicule selon l'une quelconque des revendications 1 à 4, **caractérisée en ce que** le joint anti-bruit et anti-eau (10) est composé d'une masse d'étanchéité injectée (14).

6. Portière de véhicule selon l'une quelconque des revendications 1 à 5, **caractérisée en ce que** le joint anti-bruit et anti-eau (10) constitue une bande de joint accessoire (2) qui s'étend au moins par endroits parallèlement à une bande de joint principale (3), la bande de joint principale entourant totalement ou partiellement l'ouverture de la portière dans la carrosserie et/ou la portière (1).
